Europäisches Patentamt

European Patent Office

Office européen des brevets

(11) Publication number: **0 271 230 B1**

## EUROPEAN PATENT SPECIFICATION

(45) Date of publication of patent specification: **21.07.93**　(51) Int. Cl.⁵: **G01N 21/89**, G01D 1/14

(21) Application number: **87310055.6**

(22) Date of filing: **13.11.87**

(54) Apparatus for pre-processing sensor data.

(30) Priority: **10.12.86 US 940139**

(43) Date of publication of application:
**15.06.88 Bulletin 88/24**

(45) Publication of the grant of the patent:
**21.07.93 Bulletin 93/29**

(84) Designated Contracting States:
**DE FR GB IT SE**

(56) References cited:
**GB-A- 2 118 298**
**US-A- 4 011 457**
**US-A- 4 417 149**
**US-A- 4 539 561**
**US-A- 4 583 861**

**NOUVEL AUTOMATISME, vol. 23, no. 11, November 1978, pages 342-345; J.L. LELIEVRE et al.: "Traitement d'images en temps réel pour la détection de défauts"**

(73) Proprietor: **AccuRay Corporation**
**650 Ackerman Road**
**Columbus Ohio 43202(US)**

(72) Inventor: **Williams, Paul**
**6185 Renner Road**
**Columbus Ohio 43228(US)**

(74) Representative: **Hayward, Denis Edward Peter et al**
**Lloyd Wise, Tregear & Co. Norman House**
**105-109 Strand**
**London WC2R 0AE (GB)**

EP 0 271 230 B1

# Description

This invention relates to apparatus for high-speed pre-processing of sensor data, wherein the sensor data express measurements of a varying physical property of a material which is under inspection during production or processing thereof.

Although computers have dramatically increased the speed with which information can be processed, certain data acquisition devices can accumulate and deliver useful information at speeds which exceed the data processing capabilities of typical computers. This mismatch between data acquisition speed and data processing speed imposes practical limitations on applications for material inspection systems in basic manufacturing processes. For example, in the production of sheet materials (e.g. papers, plastic sheet, metal sheet), the product may be moving at speeds of several hundred meters per minute. Mere detection of a flaw in materials moving at such speeds can be accomplished with existing sensors. However, the ability to describe the flaw has been limited because, in order to determine flaw dimensions or shape while continuing to service real-time inspection requirements, a typical computer must perform a series of operations over an interval of time that is prohibitive in view of the required rate of sensor data acquisition.

Whether used for flaw detection or measurement, applications for material inspection systems are restricted by the above-exemplified limitation and United States Patent Specification No. 4,417,149 is a typical example of this. In accordance with what is shown in this Specification, the signals for each discrete area of the material being inspected are fed to the memory, subject only to being passed through a wave height discriminator to eliminate noise.

This invention overcomes this limitation by providing apparatus for pre-processing a multiplicity of sensor data in a manner which effects a corresponding multiplicity of high-speed comparisons between the sensor data and associated reference data, wherein each reference datum is associated with a particular sensor datum of independent source.

According to the present invention, there is provided apparatus for inspecting sheet material, said apparatus comprising:
sensor means for deriving a plurality of pixel signals each having a magnitude representing the intensity of electromagnetic radiation received from a different corresponding point of the sheet material which intensity varies according to a particular physical property of the sheet material signal pre-processing means for comparing the magnitude of each one of the pixel signals with a reference signal, and a main signal processor for receiving the signals, characterised in that the reference signals define a reference signal range for each pixel signal corresponding to a respective point on the sheet material, these individual respective reference signals being stored in memory at different addresses each defining the respective point on the sheet material, the signal pre-processing means compare the magnitude of each one of the pixel signals with the reference signal range for that signal and generate for that signal either a data signal representing the magnitude of that pixel signal if the pixel signal falls within the reference signal range for that signal or an out-of-range signal if the pixel signal falls outside the reference signal range for the signal, and the said processed data signals or the said out-of-range signals are supplied to the main signal processor together with address signals representing the respective addresses appertaining to the points on the sheet material to which the data or out-of-range signals relate.

In the preferred embodiment, the reference signals and corresponding pixel signals are delivered in groups of three to an analog-to-digital converter. The analog-to-digital converter converts these input signals into output signals which are either data signals or out-of-range signals. Each data signal has a magnitude that indicates the value of the pixel signal in relation to a scale that is determined by the associated pair of reference signals. The reference signals may define upper and lower limits of a normal range of magnitude for the pixel signal, or they may express "zero" and "full-scale" values for a physical property of the sheet material of which the pixel signal represents a measurement. The data signals and out-of-range signals are delivered to a main signal processor for processing in accordance with the inspection objectives of the particular application. There may further be provided means for selectively delivering the output signals of the analog-to-digital converter so that only those data or out-of-range signals which are of interest in the particular application need be processed.

It is thus an advantage of this invention that by the use of high-speed signal pre-processing the data signals for delivery to a digital computer, or other main signal processor, may represent an already-standardized measurement of a physical property of the sheet material which is under inspection.

It is a further advantage that the signal preprocessor can detect, and describe the shape of, flaws in a sheet material that is in motion during production or processing thereof, without interfering with the simultaneous servicing of real-time inspection requirements by the main computer.

Thus, the signal processing requirements placed upon main computers used in sheet material manufacturing process control applications are substantially reduced.

An embodiment of the invention will now be described in more detail, by way of example, and with reference to the accompanying drawings in which:-

Fig. 1 is a schematic diagram of an embodiment of the invention, illustrating its use in conjunction with an optical sensor.

Fig. 2 is a graph illustrating the relationship between the magnitudes of a hypothetical sensor datum and its associated pair of reference data in a particular application for the invention.

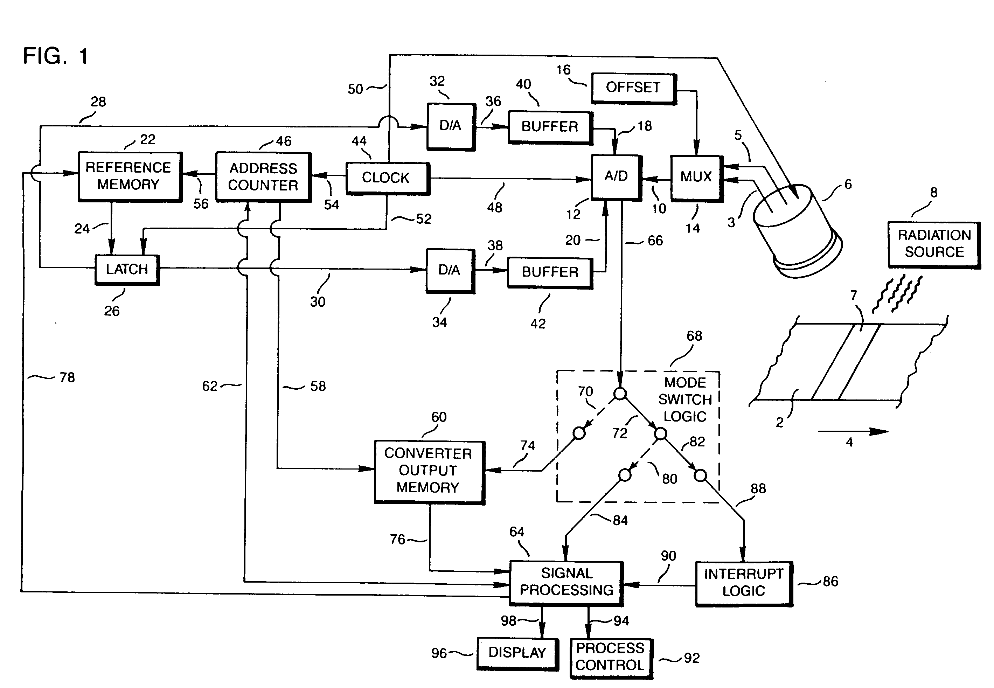

Referring to Fig. 1, the numeral 2 designates a material that is in motion during continuous production or processing thereof, as indicated at 4. The material 2 is typically inspected to determine whether it conforms to one or more parameters or ranges for one or more measurable physical qualities. Alternatively, the material 2 may be inspected for the presence of flaws, for deviation from a desired surface pattern, or for other quality attributes. Typically, these operations are performed by apparatus which are variously described by the words sensors or gauges, or by words of similar import. The sensors typically produce electronic sensor data in the form of analog signals, the magnitudes of which depend on a physical property of the material 2 that correlates with the quality attribute. Examples of such physical properties are transmittance, reflectance, and absorption. The physical property of interest will in general be dictated by the composition of the material 2 and by the measurement or inspection objectives of a particular application. In some applications, plural physical properties may be of interest.

Although the particular means for providing sensor data is not especially important in the practice of this invention, the invention is particularly useful in connection with sensors that are capable of providing sensor data at a rate which is high in comparison to the processing speed of computers used in manufacturing environments. Some optical sensors (The phase "optical sensors" in herein defined as a class of sensors which employ a source of visible or infrared radiation in conjunction with one or more detectors to inspect a material in a non-contacting fashion.) already have such capability, and it is believed that the invention can be most advantageously used in connection with that class of sensors.

A means for providing sensor data is illustrated in Fig. 1 in the form of a CCD (charge-coupled device) camera 6. Such cameras are available, for example, from Fairchild Camera and Instrument Corporation. The camera 6 is typically a line-scan camera having a linear CCD array coupled with a charge-detector/amplifier (not shown). However, where appropriate to the application, the camera 6 may contain a two-dimensional CCD array. Moreover, where the width of the material 2 is too great for scanning by a single CCD array, plural, adjacent arrays may be used so that their combined, adjacent areas of inspection extend across the entire width of the material.

The CCD array contained in the camera 6 is focused on an area of inspection 7 corresponding to a portion of the material 2. Accordingly, each pixel (picture element) of the CCD array is focused on a smaller area contained within the area of inspection 7. These smaller areas are adjacent each other, and extend along the area of inspection 7 in a direction transverse to the direction of motion of the material 2. An elelectromagnetic radiation source 8 irradiates the area of inspection 7 at a known intensity, and a portion of the radiation is reflected from the area of inspection to the CCD array. Accordingly, there is produced for each pixel a response (sensor datum), conveniently called a fixed signal, that depends, in the embodiment shown, on the reflectance of the material 2 at the particular small area on which the pixel is focused. The CCD array typically contains a multiplicity of pixels. It will therefore be recognized that a multiplicity of sensor data is produced for any given frame, the precise number depending on the particular CCD array employed, and that the magnitudes of the sensor data express measurements of reflectance for a corresponding multiplicity of small areas of the material 2. Of course, the orientation of the radiation source 8 and the camera 6 with respect to the material 2 could be changed for a given application if it were desired that the sensor data express measurements of transmittance.

The sensor data are sequentially communicated via line 10 to an analog-to-digital converter 12 (hereinafter "A/D converter") for pre-processing. Where the CCD camera 6 employs plural transport shift registers with separate output lines (as at 3 and 5), it will be necessary to multiplex the sensor data for delivery to the A/D converter 12, as indicated at 14. Typically, a D.C. offset is applied to ensure that the magnitudes of the sensor data are in a range that is suitable for the A/D converter 12, as indicated at 16.

For each sensor datum it receives, the A/D converter 12 also receives a pair of data from a means for providing a multiplicity of pairs of reference data. These reference data are received as anlog signals via lines 18 and 20, and are associated with the particular sensor datum that is received by the A/D converter 12. The A/D converter 12 should be, in the embodiment of Fig. 1, of a type which receives and converts triads of data to an output signal having a magnitude that is determined by the pair of reference data and the associated sensor datum. More particularly, each output signal has a magnitude that indicates a value for the sensor datum in relation to a scale that is determined by the pair of reference data. For example, the A/D converter 12 may produce an output signal having the following magnitude:

$$(BR) (SD - R2)/(R1 - R2) \qquad (1)$$

where SD is the magnitude of the sensor datum, R1 is the magnitude of a high-reference datum, R2 is the magnitude of a low reference datum, and BR is the resolution of the A/D converter 12 (e.g. If the A/D converter is an eight-bit converter, then BR is 256).

In general, the reference data express reference magnitude for the sensor datum of the same triad. For example, the reference data may express upper and lower limits of a normal range of magnitudes for the sensor datum, or they may express zero and full-scale values for the physical property that are derived from a standardization procedure, as is more fully explained hereinafter. The reference data are stored in a reference memory 22 that is internal to the pre-processing circuitry. Typically, the reference memory 22 comprises one or more conventional random-access memory chips, the necessary overall capacity of which is determined by the described resolution of the A/D converter 12 and by the number of independent sources of sensor data (in the embodiment of Fig. 1, the number of pixels in the CD array.) The reference data are communicated from the reference memory 22 as digital signals via one or more buses 24 to a latch circuit 26. The latch circuit 26 holes each pair of reference data until it receives a pulse via line 52, whereupon it delivers one of the reference data along bus 28, and the other along bus 30, to digital-to-analog converters 32 and 34 (hereinafter "D/A" converters). Upon conversion, the reference data are communicated as analog signals via lines 36 and 38 through buffers 40 and 42 (conventional current-to-voltage converters) to lines 18 and 20.

It will be recognized that these operations are subject to timing requirements. For example, every datum of the triad must be present at the A/D converter 12 when the conversion takes place. Moreover, the A/D converter 12 should effect the conversion at some point after the settling time of the output from the D/A converters 32, 34. Accordingly, clock circuit 44 is provided to manage timing requirements. The clock 44 instructs the A/D converter 12 to effect the conversion, instructs the camera 6 to deliver the next sensor datum, instructs the latch 26 to deliver the next pair of reference data, and increments an address counter 46 via pulses delivered along lines 48, 50, 52, and 54, respectively.

The address counter 46 delivers address signals along lines 56 and 58 to the reference memory 22 and a remote converter data memory 60, and along a two-way communication line 62 to a remote signal processing unit 64, thus maintaining proper correspondence between output signals and associated pixels. Reset functions (not shown) are provided for the address counter 46 and the camera 6 to maintain this correspondence between successive scans of the camera.

The output signal of the A/D converter 12, or portions thereof, is delivered via bus 66 to a conventional mode switch logic 68 (represented by a rectangular box enclosed by dashed lines). The output signal is routed by the mode switch logic 68 along alternative paths 70 or 72. Path 70 is taken in the standardization mode during which the reference data are established, while path 72 is taken during the inspection mode.

In the standardization mode, the output signals are delivered along bus 74 to the converter data memory 60 where data are accumulated for each pixel. The accumulated data are then delivered via bus 76 to the signal processing unit 64 where the pair of reference data is established for each pixel in the manner indicated by the particular inspection objective. The reference data are then written to the reference memory 22 via bus 78. During standardization, the data delivered from the reference memory 22 are full-scale and zero digital values.

In the inspection mode, the output signals are routed along alternative paths 80 or 82, and may be delivered to the signal processing unit 64 either directly via bus 84, or indirectly through a conventional, hard-wired interrupt logic 86 via buses 88 and 90. The interrupt logic 86 comprises a series of gates, and means for selecting the logic criterion (e.g. output signal is zero, full-scale, either, neither, etc.) to be met by output signals which are to be delivered to the signal processing unit 64. The signal processing unit 64 --typically a digital computer -- processes the output signals delivered along buses 84 or 90 in accordance with the particular inspection objective. The signal processing unit 64 is shown to deliver data pertaining to the quality attribute of interest to a remote process control unit 92 via communication path 94. The same or related data may be delivered to a remote video display unit 96 via communication path 98.

The measurement and inspection capabilities provided by this apparatus derive from the ability of the pre-processing circuitry to provide, in effect, a multiplicity of comparisons between sensor data and associated pairs of reference data at a much higher speed than can be accomplished by computers which are currently used with material inspection systems. Some advantages of this approach over those taken in conventional material inspection systems are illustrated by the following applications for the invention:

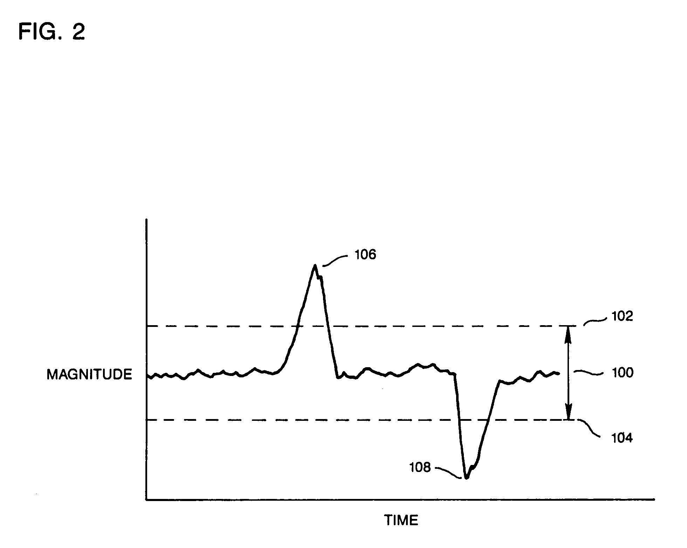

Application #1: Flaw detection. Referring to Fig. 2 of the drawings, there is shown a plot of magnitude vs. time for a hypothetical sensor datum (This plot may correspond, in the embodiment of Fig. 1, to a periodic response of a particular pixel in the CCD array as it scans the material 2.). The normal variation in magnitude of the sensor datum is determined during a conventional standardization procedure and a normal range 100 of magnitude is established such that, given normal variation in the physical property of interest, the magnitude will fall within the normal range. The upper and lower limits 102, 104 of the normal range 100 define the pair of reference data to be inputted to the reference memory 22 for that particular sensor datum, the upper limit defining a high-reference datum, and the lower limit defining a low-reference datum. Pairs of reference data are similarly established and inputted for each sensor datum. When the A/D converter 12 (Fig. 1) receives each pair of reference data, it treats the data as the upper and lower bounds of its resolution range. Bus 66 includes one line for each bit of resolution of the A/D converter 12 (Fig. 1). Whenever the sensor datum is outside the normal range 100, as at 106 and 108, the corresponding output signal delivered along bus 66 will be "all zeros" or "all ones" for those lines. A flaw in the material 2 will produce abnormality in the physical property, and all sources of sensor data (e.g. all pixels in the embodiment of Fig. 1) that are responsive to the area defined by the flaw will produce abnormal (out-of-range) sensor data. Thus, referring again to Fig. 1, the output signals delivered along bus 66, the address signals delivered along bus 62, and the speed at which the material 2 is moving (a known input to the signal processing unit 64) can be used by the signal processing unit 64 to accurately describe the shape of the flaw. The ability to describe the flaw while continuing to service real-time inspection requirements may be improved by the fact that only those sensor data having magnitudes outside their normal ranges are of interest. Therefore, only the output signals which correspond to those sensor data need be delivered to the signal processing unit 64. The selective delivery may be accomplished in a variety of ways. For example, by appropriate selection of the A/D converter 12, bus 66 can include an additional output line which communicates interrupt signals that indicate only whether the magnitude of the sensor datum is within, or outside of, the range defined by the reference data. Such A/D converters may be obtained through Advanced Micro Devices, Inc. The additional output line can be connected to the signal processing unit 64 via paths 72 and 80 while the remaining lines in bus 66 are connected to a separate data accumulation system (not shown). Alternatively, the output signal can be delivered to the interrupt logic 86 which may be programmed to deliver to the signal processing unit 64 all output signals corresponding to sensor data having magnitudes outside their normal ranges. To further decrease the computational requirements of the signal processing unit 64, the interrupt logic 86 may be designed to deliver only the beginning and ending output signals for a succession of out-of-range sensor data corresponding to any independent source, since only these data may be required to describe the shape of the flaw. This may be accomplished by incorporating conventional inverter circuitry within the interrupt logic 86 so that, upon receiving a first output signal from any pixel that corresponds to the leading edge of a flaw, the interrupt logic reverses its criterion for delivering signals along bus 90. In existing material inspection systems, all sensor data are typically delivered to a computer and processed in accordance with one or more algorithms that incorporate the sensor data as well as calibration and/or standardization data that are stored in the computer memory.

Application #2: Standardization. The reference data may serve as standardization data for each sensor datum having an independent source. In this application, each pair of reference data represents zero and full-scale values for the physical property, as adjusted by the responsiveness of the source of the particular sensor datum associated with the pair. For example, the dark responses for each pixel in a CCD camera that is focused on a material standard having a known, uniform reflectance of eighty percent may be adjusted in accordance with the known reflectance to obtain a "zero value" for reflectance for each pixel. In this example, the zero value would be the dark response divided by eight-tenths. Similarly, the pixel responses may be adjusted in accordance with the known reflectance under conditions of normal irradiation of the material standard to obtain a "full scale value" for reflectance for each pixel. The "zero values" and "full scale values" are the pairs of reference data inputs to the reference memory 22. It will be recognized that in this application, if the output signal delivered along bus 66 has the magnitude indicated by equation "1", then it expresses an already-standardized measurement (within the accuracy limitations imposed by the resolution of the A/D converter 12) of the physical property that is obtained by a straightforward conversion. Therefore, numerous retrieval, storage, and computational operations that would otherwise be performed within the signal processing unit 64 are avoided.

Other applications will become apparent to those acquainted with material inspection systems.

## Claims

1. Apparatus for inspecting sheet material, said apparatus comprising: sensor means (6) for deriving a plurality of pixel signals each having a magnitude representing the intensity of electromagnetic radiation received from a different corresponding point on the sheet material (2) which intensity varies according to a particular physical property of the sheet material, signal pre-processing means (12, 22, 44, 46) for comparing the magnitude of each one of the pixel signals with a reference signal, and a main signal processor (64) for receiving the signals, characterised in that the reference signals define a reference signal range for each pixel signal corresponding to a respective point on the sheet material, these individual respective reference signals being stored in memory (22) at different addresses each defining the respective point on the sheet material, the signal pre-processing means (12, 22, 44, 46) compare the magnitude of each one of the pixel signals with the reference signal range for that signal and generate for that signal either a data signal representing the magnitude of that pixel signal if the pixel signal falls within the reference signal range for that signal or an out-of-range signal if the pixel signal falls outside the reference signal range for the signal, and the said processed data signals or the said out-of-range signals are supplied to the main signal processor (64) together with address signals representing the respective addresses appertaining to the points on the sheet material to which the data or out-of-range signals relate.

2. Apparatus according to Claim 1, wherein the reference signals express upper and lower limits of a normal range of magnitudes for the respective pixel signals, the normal range covering magnitudes that occur given normal variation in said particular physical property of the sheet material.

3. Apparatus according to Claim 1 or Claim 2, wherein the signal pre-processing means delivers to the main signal processor only said out-of-range signals.

4. Apparatus according to Claim 3, wherein, for any uninterrupted sequence of said out-of-range signals, the signal pre-processing means delivers to the main processor only the beginning and end out-of-range signals of the sequence.

5. Apparatus according to Claim 1, wherein the reference signals express zero and full-scale values for said particular physical property of the sheet material.

6. Apparatus according to any preceding claim, wherein the sensor means comprises an optical sensor.

7. Apparatus according to any preceding claim, wherein said particular physical property is reflectance.

8. Apparatus according to any preceding claim, wherein the reference signals are provided by a random-access memory (22) for storing the reference signals.

9. Apparatus according to any preceding claim, wherein the signal pre-processing means operates to provide data signals having a magnitude commensurate with:

$$(SD - R2) / (R1 - R2)$$

where SD is the magnitude of the pixel signal, and R1 and R2 are respectively the magnitudes of reference signals defining the upper and lower limits of said reference signal range.

10. Apparatus according to any preceding claim, wherein the signal pre-processing means comprises an analog-to-digital converter (12).

11. Apparatus according to Claims 8 and 10, wherein the reference signals are supplied by the random access memory to the analog-to-digital converter via two digital-to-analog converters (32, 34).

12. Apparatus according to any preceding claims, wherein out-of-range signals from the signal pre-processing means are applied to interrupt logic (86) associated with the main signal processor.

13. Apparatus according to Claims 8 and 10, or Claim 11, further comprising a clock circuit (44) providing clock signals to the analog-to-digital converter, the sensor means and addressing means (46) of the random access memory.

**14.** Apparatus according to any of Claims 8, 11 and 13, wherein the main signal processor is connected for providing input to the random-access memory.

**Patentansprüche**

**1.** Einrichtung zur Kontrolle von Bogenmaterial, wobei die besagte Einrichtung folgendes umfaßt:

Sensormittel (6) zum Ableiten einer Mehrzahl von Pixelsignalen, deren jeweilige Größe die Stärke der von einem unterschiedlichen entsprechenden Punkt auf dem Bogenmaterial (2) empfangenen elektromagnetischen Strahlung darstellt, wobei sich die Stärke einer bestimmten physikalischen Eigenschaft des Bogenmaterials verändert, Signalvorverarbeitungsmittel (12, 22, 44, 46) zum Vergleichen der Größe eines jeden der Pixelsignale mit einem Bezugssignal, und einen Hauptsignalprozessor (64) zum Empfangen der Signale, dadurch gekennzeichnet, daß die Bezugssignale einen Bezugssignalbereich für jedes einem entsprechenden Punkt auf dem Bogenmaterial entsprechende Pixelsignal definieren, wobei diese einzelnen entsprechenden Bezugssignale im Speicher (22) an unterschiedlichen Adressen gespeichert werden, die jeweils den entsprechenden Punkt auf dem Bogenmaterial definieren, die Signalvorverarbeitungsmittel (12, 22, 44, 46) die Größe eines jeden der Pixelsignale mit dem Bezugssignalbereich für dieses Signal vergleichen und für dieses Signal entweder ein die Größe dieses Pixelsignals darstellendes Datensignal erzeugen, wenn das Pixelsignal in den Bezugssignalbereich für dieses Signal fällt, oder ein Außer-Bereich-Signal, wenn das Pixelsignal nicht in den Bezugssignalbereich für das Signal fällt, und die besagten verarbeiteten Datensignale oder die besagten Außer-Bereich-Signale dem Hauptsignalprozessor (64) zugeführt werden, zusammen mit Adreßsignalen, die die entsprechenden, den Punkten auf dem Bogenmaterial, auf die sich die Daten oder Außer-Bereich-Signale beziehen, zugehörigen Adressen darstellen.

**2.** Einrichtung nach Anspruch 1, dadurch gekennzeichnet, daß die Bezugssignale Ober- und Untergrenzen eines normalen Größenbereichs für die entsprechenden Pixelsignale darstellen, wobei der Normalbereich Größen abdeckt, die bei normaler Veränderung der besagten bestimmten physikalischen Eigenschaft des Bogenmaterials auftreten.

**3.** Einrichtung nach Anspruch 1 oder Anspruch 2, dadurch gekennzeichnet, daß das Signalvorverarbeitungsmittel nur besagte Außer-Bereich-Signale an den Hauptsignalprozessor abgibt.

**4.** Einrichtung nach Anspruch 3, dadurch gekennzeichnet, daß für jede ununterbrochene Folge der besagten Außer-Bereich-Signale das Signalvorverarbeitungsmittel nur die Anfangs- und Schluß-Außer-Bereich-Signale der Folge an den Hauptprozessor abgibt.

**5.** Einrichtung nach Anspruch 1, dadurch gekennzeichnet, daß die Bezugssignale Werte Null und Skalenende für die besagte bestimmte physikalische Eigenschaft des Bogenmaterials darstellen.

**6.** Einrichtung nach einem beliebigen vorhergehenden Anspruch, dadurch gekennzeichnet, daß das Sensormittel einen optischen Sensor umfaßt.

**7.** Einrichtung nach einem beliebigen vorhergehenden Anspruch, dadurch gekennzeichnet, daß die besagte bestimmte physikalische Eigenschaft der Reflektionsgrad ist.

**8.** Einrichtung nach einem beliebigen vorhergehenden Anspruch, dadurch gekennzeichnet, daß die Bezugssignale durch einen Direktzugriffsspeicher (22) zur Speicherung der Bezugssignale bereitgestellt werden.

**9.** Einrichtung nach einem beliebigen vorhergehenden Anspruch, dadurch gekennzeichnet, daß das Signalvorverarbeitungsmittel die Bereitstellung von Datensignalen mit einer Größe entsprechend:

$$(SD - R2) / (R1 - R2)$$

bewirkt, wobei SD die Größe des Pixelsignals und R1 und R2 die Größen von die Ober- bzw. die Untergrenzen des besagten Bezugssignalbereichs definierenden Bezugssignalen sind.

**10.** Einrichtung nach einem beliebigen vorhergehenden Anspruch, dadurch gekennzeichnet, daß das Signalvorverarbeitungsmittel einen Analog/Digital-Umsetzer (12) umfaßt.

**11.** Einrichtung nach Ansprüchen 8 und 10, dadurch gekennzeichnet, daß die Bezugssignale dem Analog/Digital-umsetzer über zwei Digital/Analog-Umsetzer (32, 34) vom Direktzugriffsspeicher zugeführt werden.

**12.** Einrichtung nach einem beliebigen der vorhergehenden Ansprüche, dadurch gekennzeichnet, daß Außer-Bereich-Signale vom Signalvorverarbeitungsmittel an die dem Hauptsignalprozessor zugeordnete Unterbrechungslogik (86) angelegt werden.

**13.** Einrichtung nach Ansprüchen 8 und 10 oder Anspruch 11, weiterhin gekennzeichnet durch eine Taktschaltung (44), die Taktsignale für den Analog/Digital-Umsetzer, die Sensormittel und Adressierungsmittel (46) des Direktzugriffspeichers bereitstellt.

**14.** Einrichtung nach einem beliebigen der Ansprüche 8, 11 und 13, dadurch gekennzeichnet, daß der Hauptsignalprozessor zur Bereitstellung von Eingabe für den Direktzugriffsspeicher geschaltet ist.

**Revendications**

**1.** Appareil pour inspecter une matière en feuille, comprenant :

un capteur (6) pour fournir une pluralité de signaux de pixels ayant chacun une grandeur représentant l'intensité de rayonnement électromagnétique reçue d'un point correspondant différent sur la matière en feuille (2), cette intensité variant en fonction d'une propriété physique particulière de la matière en feuille, des moyens de prétraitement de signaux (12, 22, 44, 46) pour comparer la grandeur de chacun des signaux de pixels à un signal de référence, et un processeur de signaux principal (64) pour recevoir les signaux, caractérisé en ce que les signaux de référence définissent une plage de signal de référence pour chaque signal de pixel correspondant à un point respectif sur la matière en feuille, ces signaux de référence respectifs individuels étant stockés dans une mémoire (22) à différentes adresses définissant chacune le point respectif sur la matière en feuille, les moyens de prétraitement de signaux (12, 22, 44, 46) comparent la grandeur de chacun des signaux de pixels à la plage de signal de référence pour ce signal et produisent, pour ce signal, soit un signal de données représentant la grandeur de ce signal de pixel si le signal de pixel tombe dans la plage de signal de référence pour ce signal, soit un signal hors de plage si le signal de pixel tombe en dehors de la plage de signal de référence pour le signal, et les signaux de données traités ou les signaux hors de plage sont fournis au processeur de signaux principal (64) en même temps que des signaux d'adresse représentant les adresses respectives appartenant aux points de la matière en feuille auxquels se rapportent les données ou les signaux hors de plage.

**2.** Appareil suivant la revendication 1, dans lequel les signaux de référence expriment des limites supérieure et inférieure d'une plage normale de grandeurs pour les signaux de pixels respectifs, la plage normale couvrant des grandeurs qui se présentent compte tenu d'une variation normale de la propriété physique particulière de la matière en feuille.

**3.** Appareil suivant la revendication 1 ou 2, dans lequel les moyens de prétraitement de signaux ne fournissent au processeur de signaux principal que les signaux hors de plage.

**4.** Appareil suivant la revendication 3, dans lequel, pour une quelconque séquence ininterrompue des signaux hors de plage, les moyens de prétraitement de signaux ne fournissent au processeur principal que les signaux hors de plage du début et de la fin de la séquence.

**5.** Appareil suivant la revendication 1, dans lequel les signaux de référence expriment des valeurs zéro et des valeurs maximales pour la propriété physique particulière de la matière en feuille.

**6.** Appareil suivant l'une quelconque des revendications précédentes, dans lequel le capteur est un capteur optique.

**7.** Appareil suivant l'une quelconque des revendications précédentes, dans lequel la propriété physique particulière est la réflectance.

**8.** Appareil suivant l'une quelconque des revendications précédentes, dans lequel les signaux de référence sont fournis par une mémoire vive (22) destinée à stocker les signaux de référence.

**9.** Appareil suivant l'une quelconque des revendications précédentes, dans lequel les moyens de prétraitement de signaux interviennent pour fournir des signaux de données ayant une grandeur proportionnée à :

(SD - R2) / (R1 - R2)

où SD est la grandeur du signal de pixel et R1 et R2 sont, respectivement, les grandeurs de signaux de référence définissant les limites supérieure et inférieure de la plage de signal de référence.

10. Appareil suivant l'une quelconque des revendications précédentes, dans lequel les moyens de prétraitement de signaux comprennent un convertisseur analogique-numérique (12).

11. Appareil suivant les revendications 8 et 10, dans lequel les signaux de référence sont fournis par la mémoire vive au convertisseur analogique-numérique par l'intermédiaire de deux convertisseurs numériques-analogiques (32, 34).

12. Appareil suivant l'une quelconque des revendications précédentes, dans lequel des signaux hors de plage provenant des moyens de prétraitement de signaux sont appliqués à une logique d'interruption (86) associée au processeur de signaux principal.

13. Appareil suivant les revendications 8 et 10 ou 11, comprenant, en outre, un circuit d'horloge (44) fournissant des signaux d'horloge au convertisseur analogique-numérique, au capteur et au moyen d'adressage (46) de la mémoire vive.

14. Appareil suivant l'une quelconque des revendications 8, 11 et 13, dans lequel le processeur de signaux principal est connecté pour fournir un signal d'entrée à la mémoire vive.

FIG. 1

EP 0 271 230 B1

FIG. 2

MAGNITUDE

TIME